# FASCICULE DE BREVET EUROPEEN

(11) **EP 1 249 064 B1**
(45) Date de publication et mention de la délivrance du brevet: **15.02.2012**
(21) Numéro de dépôt: 01976377.0
(22) Date de dépôt: 08.10.2001
(51) Int. Cl.: H02K 5/15, H02K 9/06

(54) **MACHINE ELECTRIQUE TOURNANTE, ET NOTAMMENT ALTERNATEUR DE VEHICULE AUTOMOBILE, COMPORTANT UN STATOR MONTE ELASTIQUEMENT DANS UNE RESINE THERMOCONDUCTRICE**
DREHENDE ELEKTRISCHE MASCHINE, INSBESONDERE EIN FAHRZEUGGENERATOR, MIT EINEM THERMISCH LEITENDEN ELASTOMER GELAGERTEM STATOR
ROTARY ELECTRIC MACHINE, AND IN PARTICULAR MOTOR VEHICLE ALTERNATOR, COMPRISING A STATOR ELASTICALLY MOUNTED IN A HEAT-CONDUCTIVE RESIN

(30) Priorité: 06.10.2000 FR 0013527; 15.05.2001 FR 0106386
(43) Date de publication de la demande: 16.10.2002
(73) Titulaire: VALEO EQUIPEMENTS ELECTRIQUES MOTEUR, 94017 Créteil Cedex (FR)
(72) Inventeur: HIRSOU, Daniel, F-62600 Berck sur Mer (FR); LE QUERE, Eric, F-62224 Equihen Plage (FR); MAGNIER, Michel, 62780 Cucq (FR); SELOSSE, Didier, F-62520 le Touquet (FR)
(86) Numéro de dépôt international: PCT/FR2001/003095
(87) Numéro de publication internationale: WO 2002/029958

(56) Documents cités:
- EP-A- 1 030 545
- FR-A- 2 727 807
- GB-A- 2 059 177
- US-A- 4 145 626
- US-A- 5 075 585

## Description

La présente invention concerne une machine électrique tournante.

L'invention concerne notamment un alternateur ou un alterno-démarreur utilisé pour l'alimentation en énergie du circuit électrique d'un véhicule automobile.

L'invention concerne une machine électrique tournante du type comportant un stator doté d'un corps de forme générale annulaire cylindrique qui est agencé dans un carter comprenant une portion arrière et une portion avant reliées entre elles selon un plan de joint perpendiculaire à l'axe du corps du rotor de la machine, du type dans lequel la face axiale externe du stator délimite, avec la face axiale interne du carter, un espace radial annulaire, et du type dans lequel le stator est monté serré axialement entre les surfaces radiales de portées opposées formées dans chacune des deux portions du carter, avec interposition d'au moins un premier élément déformable élastiquement comprimé axialement entre chacune des deux surfaces de portée et une portion de la face radiale annulaire d'extrémité en vis-à-vis du stator.

Une machine électrique tournante de ce type est décrite dans le document FR-A-2.727.807.

Dans un tel type de machine électrique tournante, le stator n'est pas en contact direct avec le carter mais il en est isolé par des tampons en élastomère et par de l'air. Par conséquent, le stator est isolé du point de vue vibratoire mais il n'évacue pas suffisamment les calories produites pendant le fonctionnement de la machine, et la température de fonctionnement dépasse alors les valeurs tolérées par les composants de la machine.

De plus, les tampons et joints formant amortisseurs de vibrations utilisés dans cette machine ont des formes relativement complexes, ce qui augmente le coût de fabrication et d'assemblage de la machine.

Dans le cas où le joint utilisé est du type à section en L, sa mise en place sur le stator est moins aisée dans le temps de cycle d'un procédé d'assemblage en grande série.

Ce document FR A 2.727.807 est conforme au préambule de la revendication 1.

Dans le document US A 5 075 585 de la résine thermoconductrice est interposée radialement entre le carter et les chignons du bobinage porté par le corps du stator, les chignons s'étendant de part et d'autre du corps du stator. En outre des plateaux rigides sont fixés à chaque extrémité du corps du stator, lesdits plateaux étant fixés en final aux extrémités fibres des portions du carter par soudage laser en sorte que les portions du carter ne sont pas reliées entre elles selon un plan de joint

L'invention vise à proposer un perfectionnement d'un tel type de machine électrique tournante, qui ne présente pas les inconvénients précités.

Dans ce but, l'invention propose une machine électrique tournante du type mentionné précédemment, caractérisée par la partie caractérisante de sa revendication 1.

Selon d'autres caractéristiques de l'invention :
- seule la portion avant du carter contient de la résine thermoconductrice ;
- un joint annulaire plat déformable élastiquement est interposé axialement entre la face radiale annulaire d'extrémité avant du corps du stator et la surface de portée formée dans la portion avant du carter ;
- une série de tampons déformables élastiquement sont répartis angulairement et comprimés axialement entre la face radiale annulaire d'extrémité arrière du stator et une portion de la surface de portée formée dans la portion arrière du carter ;
- chaque tampon comporte une patte de positionnement en queue d'aronde qui est reçue axialement dans un logement complémentaire formé dans la portion arrière du carter.

Grâce à l'invention, le joint annulaire plat déformable élastiquement et la série de tampons déformables élastiquement sont ménagés du fait de la présence de la résine thermoconductrice.

En outre on simplifie l'alternateur puisqu'un joint annulaire plat remplace un joint annulaire en forme de L de l'art antérieur. Les tampons sont simplifiés.

Les tampons et le joint permettent notamment d'amortir axialement les vibrations.

La résine amortit radialement les vibrations.

Grâce à la résine, on évacue bien la chaleur en sorte que l'on peut augmenter la puissance de l'alternateur.

Ainsi dans une forme de réalisation, on augmente le volume du bobinage du rotor.

Dans une forme de réalisation l'agencement de redressement est conformé pour faire face à cette augmentation de puissance et bien évacuer la chaleur.

Dans une forme de réalisation on enrobe les éléments conducteurs du bobinage du stator d'une couche de liaison pour mieux évacuer la chaleur.

L'invention concerne aussi un alternateur, notamment pour un véhicule automobile, comportant au moins l'une des caractéristiques précédentes.

D'autres caractéristiques et avantages de l'invention apparaîtront à la lecture de la description détaillée qui va suivre pour la compréhension de laquelle on se reportera aux dessins annexés dans lesquels :
- la figure 1 est une demi-vue en coupe axiale d'un alternateur réalisé conformément aux enseignements de l'invention ;
- la figure 2 est une vue en perspective qui représente un tampon amortisseur de l'alternateur de la figure 1 ;
- la figure 3 est une vue partielle en section transversale qui illustre le montage du tampon amortisseur de la figure 2 dans un logement complémentaire du carter de l'alternateur ;
- la figure 4 est une vue d'un détail de la figure 1 qui représente la portion de l'espace radial annulaire du stator contenant de la résine thermoconductrice ;
- la figure 5 est une vue similaire à la figure 1 qui illustre le positionnement du joint annulaire plat dans la portion avant du carter de l'alternateur ;
- la figure 6 est une vue similaire à la figure 1 qui illustre le positionnement du stator dans la portion avant du carter de l'alternateur, avant de couler la résine thermoconductrice dans l'espace radial annulaire et avant le montage de la portion arrière du carter ;
- la figure 7 est une vue en coupe axiale de l'alternateur de la figure 1 équipé de la portion avant du carter de la figure 6 ;
- la figure 8 est une vue en section transversale à grande échelle d'un enroulement à éléments conducteurs revêtus en étant enrobé d'une couche de liaison ;
- la figure 9 est une vue similaire à la figure 8, la couche de liaison ayant rempli les interstices existants et liant entre eux les éléments conducteurs ;
- la figure 10 est une vue en section du stator de la figure 7 placé dans un outil de conformage ;
- la figure 11 est une vue analogue à la figure 10, l'outil de conformage ayant déformé les chignons du stator ;
- la figure 12 est une vue en perspective des outils de conformage du bobinage du rotor de la figure 7 ;
- la figure 13 est une vue en coupe axiale de la figure 12 ;
- la figure 14 est une vue en perspective partielle d'un agencement de redressement destiné à être monté sur la porion arrière de l'alternateur de la figure 7 ;
- la figure 15 est une vue en perspective d'un dissipateur de chaleur de l'agencement de redressement selon la figure 13 ;
- la figure 16 est une vue de dessus du dissipateur de chaleur selon la figure 15 ;
- la figure 17 est une vue de dessus d'une plaque intermédiaire isolante de l'agencement de redressement de la figure 3 ;
- la figure 18 est une vue en perspective d'un capot destiné à coiffer l'agencement de redressement selon la figure 13.

Dans la description qui va suivre, des composants identiques ou similaires illustrés sur les différentes figures seront désignés par les mêmes chiffres de référence.

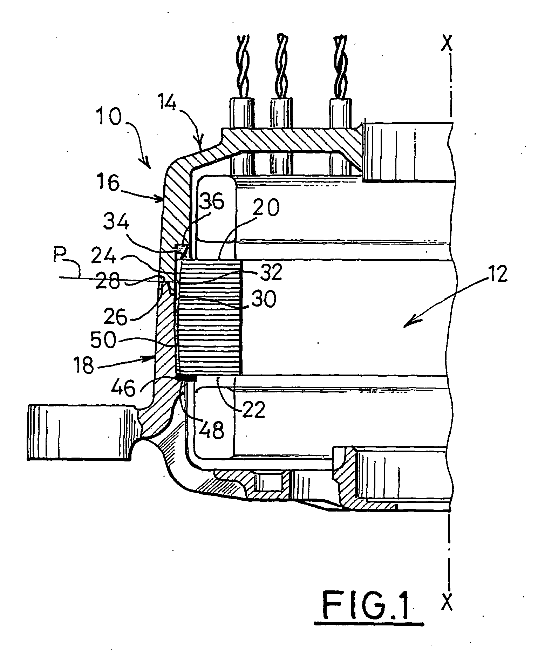

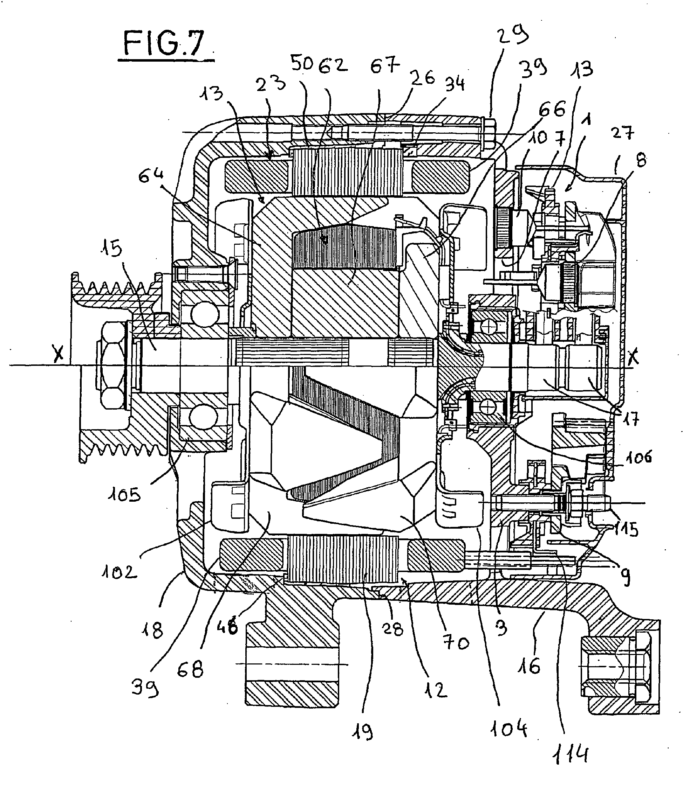

On utilisera arbitrairement une orientation d'arrière en avant, suivant l'axe X-X de l'alternateur, qui correspond à une orientation de haut en bas sur la figure 1 et de gauche à droite à gauche à la figure 7. L'axe X-X constitue l'axe de symétrie axial et de rotation de l'alternateur.

On a représenté à la figure 1 un alternateur de véhicule automobile 10 qui est constitué pour l'essentiel d'un stator 12 monté dans un carter 14 comprenant une portion arrière 16 et une portion avant 18 et d'un rotor à griffes (non représenté à la figure 1).

De manière classique, le rotor est monté tournant à l'intérieur d'une enceinte cylindrique annulaire délimitée à l'intérieur du stator 12.

Le stator 12 entoure le rotor et comporte un corps constitué par un empilage de tôles rainurées pour le montage d'un enroulement d'induit multiphasé. Ce corps présente une forme générale cylindrique annulaire délimitée par deux surfaces radiales annulaires d'extrémité arrière 20 et avant 22 et par une surface cylindrique externe 24. Les rainures du corps sont, de manière connue, de forme borgne et semi-fermées. Ces rainures débouchent à la périphérie interne du corps du stator.

Les deux portions 16 et 18 de l'enveloppe ou carter 14 qui reçoit le corps du stator 12 sont deux pièces moulées et usinées dont chacune reçoit un palier (non représenté à la figure 1) pour le montage à rotation de l'arbre du rotor. Dans les figures 1 et 7 les portions 16, 18 sont métalliques en étant à base d'aluminium.

Les deux portions 16, 18 du carter 14 sont appelées usuellement respectivement palier arrière 16 et palier avant 18. Ces portions comportent chacune une face radiale annulaire d'extrémité usinée 26, 28 qui délimitent un plan de joint P des deux portions 16, 18 du carter 14 selon lequel elles sont serrées axialement au moyen d'une série de quatre vis de serrage (non représentées à la figure 1) réparties angulairement de manière régulière autour de l'axe X-X de l'alternateur 10.

La surface cylindrique externe 24, du corps du stator 12 délimite avec la surface cylindrique interne 30 du carter 14 un espace radial annulaire 32.

Le corps du stator 12 est suspendu élastiquement à l'intérieur du carter 14 en deux portions 16, 18 pour réduction des bruits notamment les bruits magnétiques.

Conformément à un agencement connu de l'état de la technique, le corps du stator 12 comporte, à l'arrière, une série de tampons élastiques 34 en forme de blocs qui sont ici au nombre de quatre et qui sont répartis angulairement de manière régulière autour de l'axe X-X, de manière à s'interposer axialement entre une portion de la face radiale annulaire d'extrémité arrière 20 du corps du stator 12 et une surface radiale annulaire de portée arrière 36 formée en vis-à-vis dans la portion en forme de jupe cylindrique de la portion arrière 16 du carter 14.

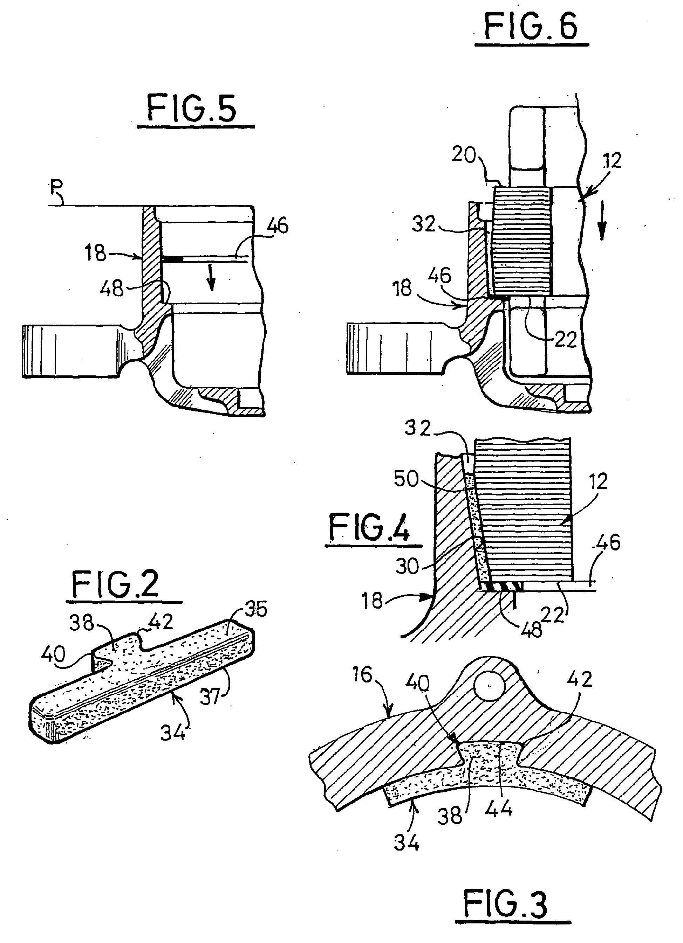

Sur la figure 2 on a représenté un exemple de tampon 34, qui est simplifié par rapport à celui de l'art antérieur.

Chaque tampon 34 est ici un bloc de forme générale parallélépipédique rectangle qui délimite deux faces parallèles et opposées d'appui 35 et 37 dont chacune prend respectivement appui contre une portion en vis-à-vis de la face radiale annulaire d'extrémité arrière 20 du corps du stator 12 et contre la surface radiale annulaire de portée 36 usinée dans la portion arrière 16 du carter 14.

Chaque tampon 34 en forme de bloc rectangulaire se prolonge latéralement par une patte de positionnement 38 en queue d'aronde comportant deux arêtes axiales 40, 42.

La patte de positionnement 38 est reçue axialement dans un logement complémentaire 44 formé dans la portion en forme de jupe cylindrique de la portion arrière 16 du carter 14, comme on peut le voir sur la figure 3.

La patte de positionnement 38 est réalisée venue de matière en une seule pièce.

Le stator 12 comporte, à l'avant, un joint annulaire plat 46 déformable élastiquement qui s'interpose axialement entre une portion de la face radiale annulaire d'extrémité avant 22 du stator 12 et une surface radiale annulaire de portée 48 formée en vis-à-vis dans la portion en forme de jupe cylindrique de la portion avant 18 du carter 14.

Le joint plat 46 remplace avantageusement un joint à section en forme de L de l'art antérieur.

Les tampons 34 et le joint annulaire 46 sont réalisés en matériau compressible axialement, par exemple en élastomère ou en caoutchouc.

Après serrage, et comme cela est illustré sur la figure 1, les tampons 34 et le joint annulaire 46 sont comprimés axialement entre les faces radiales annulaires d'extrémité 20, 22 du corps du stator 12 et les surfaces de portée 36, 48 associées aux portions 16, 18 du carter 14, les surfaces annulaires d'extrémité 26 et 28 du carter 14 étant serrées en contact selon le plan de joint P. Ainsi au moins un premier élément 34, 36 élastiquement déformable est interposé entre les faces 20, 22 et les surfaces de portée 36,48.

Conformément aux enseignements de l'invention et comme on le voit sur la vue de détail de la figure 4, l'espace radial annulaire 32 contient un deuxième élément élastiquement déformable sous la forme de résine 50, ou colle, thermoconductrice déformable élastiquement qui s'interpose radialement entre la surface cylindrique externe 24 du corps du stator 12 et la surface cylindrique interne 30 de la portion avant 18 du carter 14.

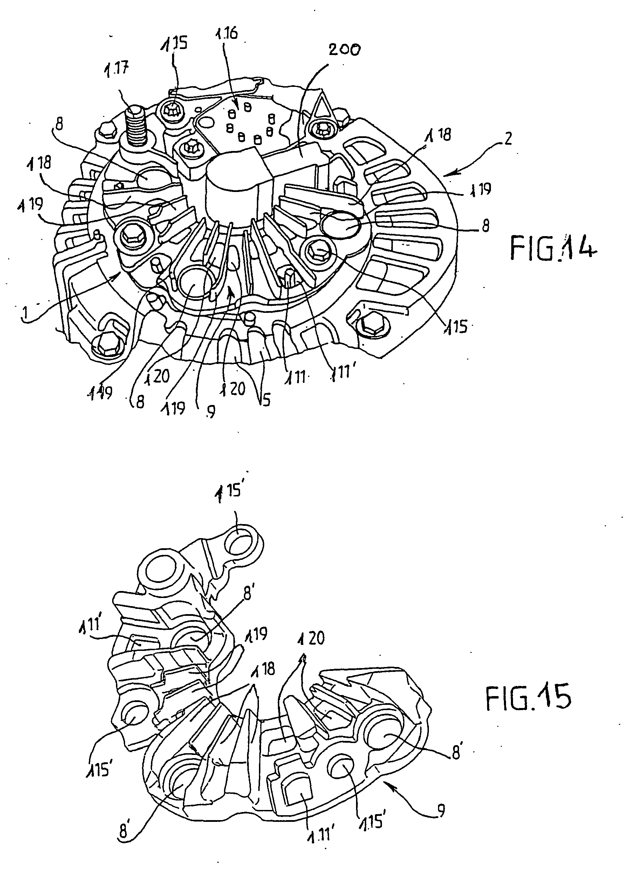

Avantageusement, on remplit seulement la portion inférieure, ou portion avant, de l'espace radial annulaire 32 avec la résine 50. La résine est ainsi éloignée de l'agencement de redressement de la figure 14 et est donc ménagée.

La résine 50 doit pouvoir se déformer élastiquement dans le sens radial, de manière à réaliser un découplage mécanique radial entre le corps du stator 12 et le carter 14.

Bien évidemment on peut également envisager de placer la résine 50 sur la portion arrière de l'espace radial annulaire 32.

Ainsi, la résine 50 amortit les vibrations radiales émises par le stator 12 pendant son fonctionnement pour empêcher qu'elles ne se transmettent au carter 14 et émettent du bruit.

La résine 50 permet aussi d'améliorer la dissipation de l'énergie thermique émise par le corps du stator 12 vers le carter 14. En effet, la résine thermoconductrice 50 conduit mieux la chaleur que l'air ou que les matériaux élastomères des tampons 34 et du joint 46. Elle permet donc à l'alternateur 10 de mieux évacuer les calories depuis le stator 12 vers le carter 14.

Cette résine permet de simplifier les tampons 34 et d'avoir un joint plat 46. Les tampons et le joint amortissent les vibrations axiales.

L'assemblage des différents composants de l'alternateur 10 s'effectue de la manière suivante.

Le joint annulaire plat 46 est mis en place dans la portion avant 18 du carter 14, la face ouverte de cette dernière étant de préférence orientée vers le haut, comme sur la figure 5.

On met ensuite en place le stator 12, dans la portion avant 18, avec sa face radiale annulaire d'extrémité avant 22 en appui axial contre le joint 46.

Avantageusement, on utilise un outil de centrage de type connu pour positionner le corps du stator, 12 coaxialement aux paliers du carter 14.

Par ailleurs, les quatre tampons 34 sont mis en place dans les logements correspondants 44 de la portion arrière 16 du carter 14.

A cet effet, il est possible de prévoir que les dimensions transversales des pattes de positionnement 38 soient légèrement supérieures à la largeur de chaque logement 44 afin d'assurer un maintien en position de la patte 38 dans le logement 44 par une légère compression du matériau constitutif de la patte 38.

On coule ensuite de la résine 50, ou colle, thermoconductrice dans l'espace radial annulaire 32 jusqu'à ce que la hauteur de la résine 50 atteigne par exemple les trois quart de la hauteur de la jupe cylindrique de la portion avant 18 du carter 14.

On note que le joint annulaire plat 46 ferme hermétiquement l'extrémité axiale avant de l'espace radial annulaire 32, ce qui empêche la résine 50 de s'écouler en dehors de l'espace radial annulaire 32, par exemple vers l'avant du carter 14.

Puis on polymérise la résine 50 de manière qu'elle soit déformable élastiquement et quelle ne coule plus.

On note que, après sa polymérisation, la résine 50 assure le centrage du corps du stator 12 et son immobilisation radiale.

On met ensuite en place la portion arrière 16 du carter 14 sur la portion avant 18 avec les faces d'appui 37 des tampons 34 en contact contre la face radiale annulaire d'extrémité arrière 20 du corps du stator 12, de manière à obtenir le montage final représenté sur la figure 1.

Selon des variantes de réalisation (non représentées) de l'invention, la résine 50 peut être injectée dans l'espace radial annulaire 32 selon plusieurs techniques connues.

On peut par exemple prévoir un trou d'injection dans la jupe cylindrique de l'une des portions 16, 18 du carter 14 en vue de réaliser l'injection de résine 50 après le montage de la portion arrière 16 sur la portion avant 18.

Bien entendu, cette invention peut également être mise en oeuvre pour des alternateurs de véhicule automobile du type décrit précédemment mais comportant un stator bobiné avec des conducteurs de gros diamètre en forme de barres. Un tel bobinage de stator est décrit par exemple dans le document WO 92/06257. Ces conducteurs en forme de barres remplissent bien les encoches que comporte le corps du stator et se présentent généralement sous la forme d'épingles de section avantageusement ronde, carrée ou rectangulaire. Des conducteurs sous la forme de barres coudées peuvent par exemple remplacer avantageusement les épingles.

Grâce à l'invention, un tel stator bobiné avec de gros conducteurs en forme de barres pourra être refroidi aisément.

L'agencement du stator dans le carter 14 selon l'invention est avantageusement applicable aux alternateurs de véhicule automobile ou aux machines électriques de type "alterno-démarreurs" connus en soi qui sont aptes à fonctionner alternativement comme moteur de démarreur ou comme alternateur. Pour plus de précision, on se reportera à la demande FR-0003131 déposée le 10 mars 2000.

Grâce à l'invention on peut augmenter la puissance de l'alternateur car la résine thermoconductrice évacue bien la chaleur.

On a représenté à la figure 7 l'alternateur 10 compact à ventilateurs internes 102, 104.

Cet alternateur, ici du type multiphasé, est constitué principalement, comme à la figure 1, d'un carter 14 en deux portions 16, 18 ajourées pour circulation de l'air. Le carter 14 porte intérieurement, comme à la figure 1, deux organes principaux qui sont le stator 12 et le rotor 13 comme décrit par exemple dans le document US A 527 605 ( EP B 0 515 259) auquel on se reportera pour plus de précisions.

Le stator 12 entoure le rotor 13 qui est solidaire d'un arbre 15 sur l'extrémité arrière duquel deux bagues collectrices 17 sont fixées, tandis qu'une poulie (non référencée) est solidaire de l'extrémité avant de l'arbre 15. Cette poulie est destinée à recevoir une courroie faisant partie d'un dispositif de transmission de mouvement entraîné par le moteur à combustion interne du véhicule automobile. L'axe X-X constitue l'axe de l'arbre 15.

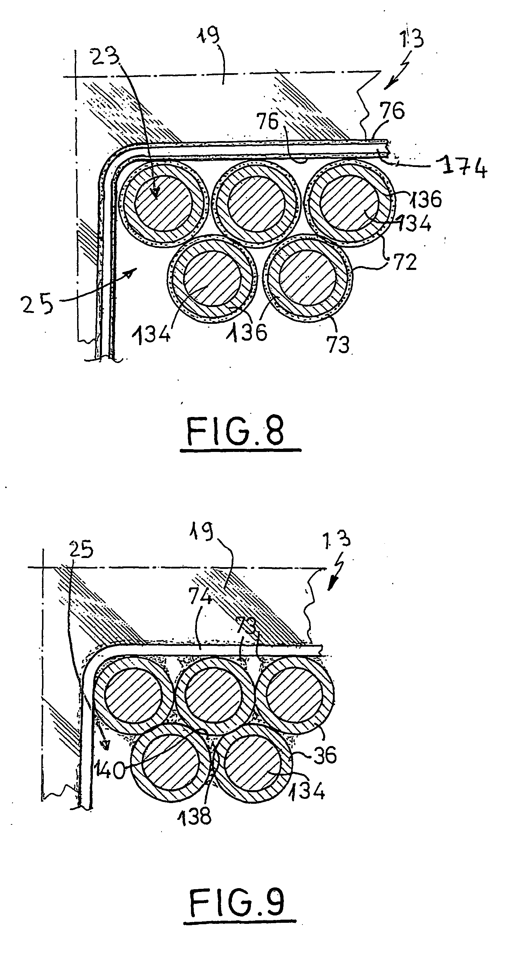

Le stator 12 est composé d'un corps 19 qui est ici constitué principalement par un empilement axial de tôles transversales en fer doux. De manière précitée et connue en soi, les tôles du stator 12 comportent chacune des encoches pour formation de rainures ici axiales. Ces rainures, dont l'une est partiellement visible en 25 dans les figures 8 et 9, débouchent à la périphérie interne du corps 19 de forme cylindrique.

Les rainures s'étendent radialement vers l'extérieur et reçoivent des brins axiaux électriquement conducteurs d'un bobinage électrique d'induit 23. Les rainures sont semi-fermées vers l'intérieur comme visible par exemple dans le document FR A 2 603 429.

Le bobinage électrique 23, visible en partie à grande échelle dans les figures 8 et 9, est, pour chaque phase de l'alternateur, constitué par exemple par l'enroulement en spires d'un fil électriquement conducteur, ici un fil de cuivre, qui est revêtu d'au moins une couche en matériau isolant électrique 136 par exemple un polyester en deux couches l'une du type polyimide, l'autre du type polyamide imide.

Une feuille 74 isolante électrique est interposée dans chaque rainure 25 entre le bobinage électrique 23 et le corps 19 du stator 13.

Cette feuille 74, immobilisée de manière décrite ci-après pour réduire les bruits et le niveau sonore de l'alternateur 10, permet de diminuer ou de supprimer les risques de court-circuit entre le bobinage 23 et le corps 19.

Du fait de l'enroulement du fil électriquement conducteur, le bobinage 23 comporte donc dans chaque rainure 25 un faisceau d'éléments électriquement conducteurs 134, qui traversent axialement les rainures 25 et sont prolongés à l'extérieur du corps 19 du stator 12 par des brins de jonction qui forment des chignons 39 s'étendant en saillie de part et d'autre de ce corps 19 conformément à la figure 7.

En variante, il est fait appel à des épingles de section circulaire on rectangulaire montées dans les rainures axiales 25 du stator 12 comme décrit dans le document WO-92/06527. En variante quatre éléments électriquement conducteur sont montés radialement à superposition par rainure.

Le rotor 13 inducteur est ici un rotor à griffes du type Lundel, qui est constitué par un bobinage électrique 62 cylindrique qui est monté entre deux plateaux 64 et 66 métalliques comportant chacun des griffes 68 et 70 respectivement, qui s'étendent axialement en direction de l'autre plateau 66 et 64. Chaque ensemble plateau-griffes constitue une roue polaire ici en acier magnétique. Un noyau 67, ici également en acier magnétique, est intercalé axialement entre les plateaux 66,64 pour porter le bobinage 62. Le noyau 67 est de forme annulaire d'orientation axiale en étant ici en forme d'une rondelle épaisse. Ce noyau 67 est distinct des roues polaires pour faciliter l'enroulement de l'élément électriquement conducteur sur le noyau 67 sans que les griffes 68,70 gênent. Chaque roue polaire est fixée sur l'arbre 15 à la faveur de parties moletées de l'arbre, dont une sert à la fixation du noyau 67. Les griffes 68 et 70 sont décalées angulairement l'une par rapport à l'autre de façon qu'une griffe 68 du plateau 64 s'intercale entre deux griffes 70 adjacentes du plateau 66, et inversement. Les griffes présentent des chanfreins pour réduire les bruits magnétiques. Pour plus de précisions, on se reportera au document EP-B-0.515.259. Ces chanfreins n'ont pas été référencés par simplicité à la figure 7.

L'alternateur est ici, comme celui du document EP-B- 0 515 259, à ventilation interne, chaque plateau 64,66 portant un ventilateur respectivement 102,104 adjacent à la portion 16, 18 concernée du carter. Chaque portion 18, 16 de carter 12 est ajourée pour circulation de l'air et porte centralement un palier sous la forme d'un roulement à billes respectivement 105, 106 pour support respectivement de l'extrémité avant et arrière de l'arbre 15. Ainsi l'une de ces portions 16, 18 est appelée palier avant (celle adjacente à la poulie) et l'autre palier arrière. On notera que cette poulie est fixée par un écrou sur l'extrémité avant filetée de l'arbre 15. Dans la partie supérieure de la figure 7 une entretoise de section en forme d'équerre est intercalée entre la bague interne du roulement 105 et la poulie. Dans la partie inférieure de cette figure 7 l'entretoise est intégrée à la poulie ce qui permet de réduire encore l'encombrement axial.

Les paliers 16, 18 ont une forme creuse et comportent chacun un fond en forme de flasque d'orientation transversale par rapport à l'axe X-X de l'alternateur et à leur périphérie externe un rebord annulaire d'orientation axiale comportant chacun la face radiale annulaire d'extrémité usinée concernée 26, 28 délimitant le plan de joint référencé en P à la figure 1.

Chaque rebord d'orientation axiale se raccorde à son autre extrémité axiale au flasque d'orientation transversal portant centralement le roulement à billes 105, 106 concerné. De manière connue chaque flasque et chaque rebord comporte des ouvertures pour la circulation de l'air. A la figure 7 on voit certaines des ouvertures réalisées dans les flasques des paliers 16, 18 et on a représenté en pointillés deux ouvertures des rebords périphériques des paliers 16, 18.

Les ouvertures des rebords sont implantées en regard des chignons 39.

Les ventilateurs 102,104 sont implantés radialement en dessous des chignons 39 en étant fixés, par exemple par soudure par points, respectivement au plateau 64 et au plateau 66. Ces ventilateurs 102, 104, solidaires du rotor 13, comportent des pales réparties avantageusement de manière irrégulière pour réduction des bruits et sont ici du type centrifuge. L'air est ainsi aspiré et traverse les ouvertures des flasques pour être refoulé à travers les ouvertures, ici de forme oblongue, des rebords périphériques.

Les ventilateurs peuvent comporter deux séries de pales comme décrit dans le document FR00 08549 déposé le 30 juin 2000.

Plus précisément la deuxième série de pales est plus courte que la première série de pales et au moins une deuxième pale est intercalée entre deux pales consécutives de la première série de pales.

Pour plus de précisions on se reportera à ce document. Toutes les variantes de ce document étant envisageables. Ainsi un couvercle peut recouvrir la première série de pales.

Les chignons 39 sont donc bien refroidis ainsi que l'agencement de redressement 1, le régulateur de tension que comporte l'alternateur 10 et les roulements à billes 105, 106.

Le palier arrière 18 porte un agencement de redressement 1 du courant alternatif produit par le bobinage 23 du stator 12, ici triphasé, et un porte-balais coopérant avec les bagues collectrices 17. Grâce à l'agencement 1 le courant alternatif produit par le bobinage 23 est transformé en courant continu pour recharger la batterie du véhicule et alimenter les consommateurs, tels que le dispositif d'éclairage, le dispositif de climatisation.... etc.

De manière connue les bagues collectrices 17 sont reliées aux extrémités du bobinage 62 du rotor 13 par des liaisons filaires passant derrière le ventilateur 104, comme visible dans cette figure 7.

Il est en outre prévu un capot de protection 27 ajouré de manière décrite ci-après pour circulation de l'air

Ce capot 27, ici en matière plastique, coiffe le porte-balais, connecté de manière connue à un régulateur de tension 116, et l'agencement de redressement doté de diodes.

Les balaies du porte-balais coopèrent par frottement contre les bagues 17. Le dispositif de régulation permet de limiter la tension fournie par le stator pour notamment protéger la batterie

Les paliers 16, 18 comportent des pattes pour leur fixation sur une partie fixe du véhicule et sont reliés entre eux à fixation ici à l'aide de vis dont l'une est visible en 29 à la figure 7. L'alternateur du véhicule est donc relié électriquement à la masse via ses paliers 16, 18.

En variante les flasques des paliers sont inclinés axialement.

En variante le ventilateur 102 est supprimé sachant que le ventilateur arrière est plus puissant.

D'une manière générale l'alternateur comporte au moins un ventilateur interne solidaire du rotor 13 et implanté à l'intérieur du carter 14 en dessous d'un chignon 39 en sorte que le bobinage 23 est bien' refroidi et que l'alternateur est de forte puissance tout en étant compact notamment axialement et peut bruyant.

En variante un unique ventilateur est implanté à l'extérieur au niveau de la poulie.

Grâce à la résine 50 selon l'invention on peut évacuer plus de chaleur par les paliers métalliques 16, 18, ici à base d'aluminium, ce qui autorise une augmentation de la puissance de l'alternateur notamment par augmentation du volume du bobinage 62 dé manière décrite ci-après. Cette augmentation de puissance nécessite de conformer de manière décrite ci-après l'agencement de redressement 1, ainsi que les bobinages 23 et 62.

Ainsi suivant une caractéristique il est proposé, pour les bobinages 23 et 62 du stator 12 et du rotor 13 respectivement, d'utiliser un fil électriquement conducteur, ici en cuivre, enroulé en spires. Le fil conducteur est de manière précitée revêtu par avance d'une couche 136 en matériau isolant électrique, qui est enrobé d'une couche 72 de liaison ou de fixation comportant au moins un matériau de liaison 73, qui permet de lier entre eux les éléments électriquement conducteurs 134 enrobés adjacents du faisceau du bobinage 23.

La figure 8 représente une section transversale partielle d'un bobinage électrique 23 d'un stator 13 réalisé selon cette caractéristique. Dans cette figure on voit une pluralité d'éléments électriquement conducteurs 134 résultant de l'enroulement du fil conducteur du bobinage 23.

Suivant une autre caractéristique, la feuille électriquement isolante 74 comporte un élément de structure 174 isolant électrique, tel que du papier ou du tissu isolant, dont au moins une des faces est au moins partiellement enduite d'un matériau de liaison 76. Par exemple seule la face tournée vers les spires du bobinage 23 est au moins partiellement enduite d'un matériau de liaison 76. Avantageusement les deux faces de l'élément de structure sont enduites d'un matériau de liaison 76 chimiquement compatible avec le premier matériau de liaison.

Le matériau de liaison 73 de la couche 72 de liaison qui enrobe la couche 136 des éléments conducteurs 134 est dans une forme de réalisation identique au matériau de liaison 76 qui enduit la feuille isolante 74.

En variante les matériaux de liaison 73 et 76 sont compatibles chimiquement et thermiquement pour optimisation de leur fonction spécifique. Le matériau 76 est ainsi choisi pour une bonne fonction de liaison avec le corps 19 et l'élément de liaison 73 est choisi pour un bon remplissage amélioré par la présence de l'élément de liaison 76.

L'élément de structure 174 peut aussi être imprégné par le matériau de liaison 76. Ainsi, lorsque l'élément de structure 174 est du tissu ou un élément non-tissé analogue, le matériau de liaison 76 recouvre ses faces et pénètre au moins partiellement entre les fibres constituant l'élément de structure 174.

Les matériaux de liaison peuvent par exemple comporter un polymère.

Le polymère peut être du type thermodurcissable qui conserve ses caractéristiques mécaniques après sa polymérisation au moins jusqu'à la température maximale de fonctionnement de l'alternateur 10 ou du type thermoplastique dont la température de fusion est supérieure à la température maximale de fonctionnement de l'alternateur 10.

Etant donné que le matériau de liaison 73 enrobe les éléments conducteurs 134 revêtus de la couche 136 en matériau isolant électrique, l'étape d'imprégnation des bobinages électriques 23 et 62 du procédé de fabrication du stator 12 et du rotor 13 de l'alternateur 10 selon l'état de la technique est supprimée, ce qui permet de diminuer le temps de fabrication de l'alternateur de plusieurs minutes, voire de plusieurs dizaines de minutes.

L'utilisation de vernis provoque des émissions de vapeur polluantes, notamment lors de son chauffage. La mise en oeuvre de matériaux de liaison 73, 76 différents sur les éléments conducteurs 134 revêtus, permet la suppression de l'utilisation de vernis et la diminution voir la suppression des rejets atmosphériques polluants.

Dans la suite de la description, on considérera que le matériau de liaison 73 de la couche 72 et le matériau de liaison 76 sont identiques.

Le procédé de fabrication de l'alternateur 10 propose ainsi que l'étape d'enroulement du fil électriquement conducteur revêtu et enrobé soit suivie d'une étape de changement d'état du matériau de liaison qui provoque son ramollissement ou sa fusion pour qu'il remplisse au moins partiellement les interstices 140 existants entre les tronçons adjacents des éléments conducteur 134, puis qui provoque à nouveau sa solidification et lie entre eux les tronçons adjacents des éléments conducteurs 134.

L'étape de changement d'état correspond à une modification de la structure du matériau de liaison, c'est-à-dire un mouvement de certains des atomes le constituant les uns par rapport aux autres.

Selon un premier mode de réalisation de l'invention, l'étape de changement d'état du matériau comporte une étape de chauffage de la couche 72 de liaison à une température de durcissement qui est supérieure ou égale à la température de fusion du matériau de liaison, de façon à le faire fondre ou ramollir pour qu'il coule ou flue de façon à remplir de préférence quasi entièrement les interstices 140 existants entre les tronçons adjacents des éléments conducteurs 134.

L'étape de chauffage et suivie d'une étape de refroidissement au cours de laquelle le matériau de liaison se durcit ou se solidifie à nouveau.

La température de durcissement ou de solidification du matériau de liaison est la température à partir de laquelle la structure du matériau est modifiée de façon que le matériau permette la liaison des éléments avec lequel il est au moins partiellement en contact.

Ainsi, lorsque le polymère est de type thermodurcissable, on appellera dans la suite de la description ainsi que dans les revendications température de durcissement sa température de réticulation.

Ainsi, lorsque le polymère est de type thermoplastique, on appellera dans la suite de la description température de durcissement sa température de fusion.

Lorsque le matériau de liaison est un polymère, les étapes de chauffage et de refroidissement permettent sa polymérisation et sa solidification qui assure la liaison rigide des tronçons adjacents des éléments conducteurs 134 revêtus entre ainsi qu'avec la feuille isolante 74, avantageusement thermoconductrice comme la résine 50 pour mieux évacuer encore la chaleur.

Lorsque la feuille isolante 74 est enduite d'un matériau de liaison 76 tel qu'un polymère, les étapes de chauffage à une température supérieure ou égale à la température de durcissement du matériau de liaison 76 et de refroidissement permettent de la lier au corps 19 du stator 13 et de renforcer sa liaison avec les tronçons adjacents des éléments conducteurs 134 revêtus.

Le matériau de liaison étant réparti de façon sensiblement régulière sur la couche 136 de matériau isolant électrique et sur et/ou dans l'élément de structure 174, sa fusion ou son ramollissement durant l'augmentation de température permet un remplissage de préférence homogène des interstices 140 existant entre les tronçons adjacents des éléments 134 revêtus, et entre les tronçons adjacents des éléments 134 revêtus et la feuille isolante 74. Ainsi, après avoir chauffé le matériau de liaison à une température supérieure ou égale à la température de durcissement du matériau de liaison 76, lors de son refroidissement et de sa solidification, les tronçons adjacents des éléments 134 et la feuille isolante 74 sont fortement liés entre eux et forment un ensemble rigide. Ainsi la feuille 74 peut avoir une faible épaisseur.

Bien entendu la feuille isolante 74 et la couche de matériau isolant électrique sont choisies pour résister à l'étape de chauffage.

Le matériau de liaison recouvre alors de préférence intégralement le bobinage 23 en assurant ainsi sa protection contre les pollutions extérieures telles que des poussières. Il assure aussi le maintien mécanique et la rigidification des éléments 134.

Le matériau de liaison permet encore une conduction thermique améliorée ce qui est favorable en combinaison avec la résine thermoconductrice 50 selon l'invention.

La face de la feuille isolante 74 qui est en contact avec la paroi de l'encoche axiale 25 peut être recouverte du matériau de liaison 76. Ainsi après le chauffage du matériau de liaison 76 à une température supérieure ou égale à sa température de durcissement, le refroidissement et la solidification du matériau de liaison 76, permet au corps 22 du stator 12 et à la feuille isolante 74 d'être fortement liés entre eux et de former un ensemble rigide.

L'invention propose aussi, concomitamment à l'étape de refroidissement, de mettre en forme de façon déterminée lés bobinages électriques 23 et/ou 62 au moyen d'un outil de conformage 78 qui exerce un effort sur au moins une zone d'un bobinage 32, 62 de façon à la déformer. Ainsi, lorsque l'étape de refroidissement est terminée, les bobinages électriques 23 et/ou 62 ont une forme déterminée qui est irréversible aux températures de fonctionnement de l'alternateur 10.

L'application de l'effort sur au moins une zone d'un bobinage 23, 62 peut avantageusement débuter avant ou pendant l'étape de chauffage et durer jusqu'au durcissement ou à la solidification du matériau de liaison 76.

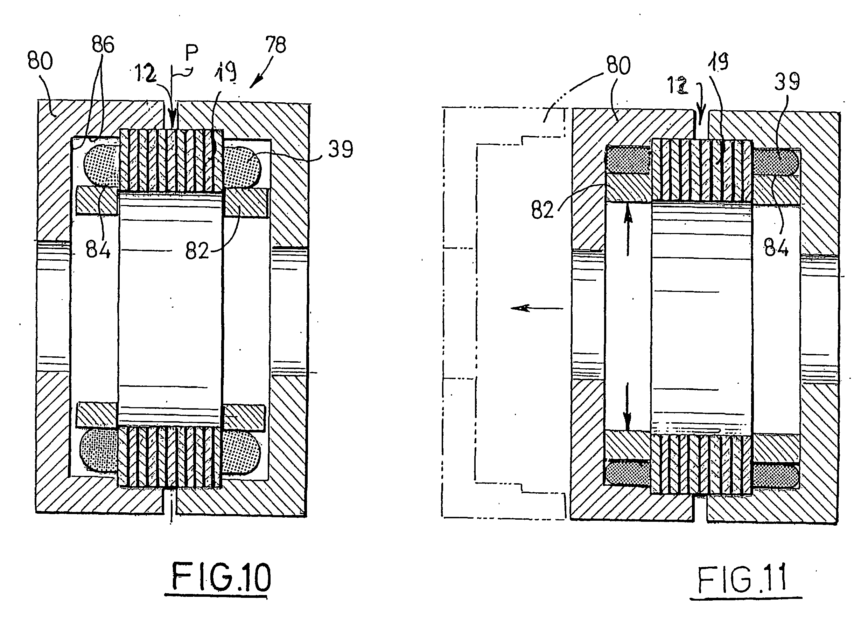

Ainsi, à l'issue de l'étape d'enroulement le stator 12 est placé dans un outil de conformage 78 représenté à la figure 10.

L'outil de conformage 78, qui est avantageusement en matériau isolant thermique et électrique, comporte une symétrie par rapport un plan médian transversal P. Dans la suite de la description on ne décrira que la partie gauche de l'outil de conformage 78 par rapport au plan médian P en référence à la figure 10.

L'outil de conformage 78 comporte une première matrice 80 périphérique extérieure fixe dans lequel le corps 19 du stator 12 est centré. Une seconde matrice 82 intérieure est mobile selon une direction radiale. La première matrice 80 est en deux parties pour venir en contact avec les extrémités du corps 19 et immobiliser axialement celui-ci.

La seconde matrice 82 permet d'exercer un effort sur la face annulaire axiale 84 du chignon 39. Elle comprime alors les tronçons des éléments conducteurs électriques 134 revêtus et enrobés formant chignon 39 contre les faces intérieures 86 de la première matrice 80, conformément à la figure 11. Cette deuxième matrice 82 est également en deux parties mobiles radialement en sens inverse l'une par rapport à l'autre.

Ensuite, le matériau de liaison est chauffé à une température supérieure ou égale à sa température de durcissement, de façon à provoquer sa fusion ou son ramollissement, et son durcissement ou sa polymérisation, notamment lorsque le matériau est un polymère. La mise sous contrainte des chignons 39 associés au remplissage des interstices 140, notamment par le matériau de liaison 73 de la couche de liaison 72, permettent un resserrement des tronçons des éléments 134, conformément à la figure 9, et une modification des dimensions extérieures des chignons 39 du stator 12.

La forme du chignon 39 correspond alors sa forme optimale qui permet de minimiser l'encombrement du stator 12 dans l'alternateur 10 et donc de réduire la taille de celui-ci.

Lors des étapes de chauffage et/ou de refroidissement, la forme optimale du stator 12 est figée de façon irréversible aux températures de fonctionnement de l'alternateur 10.

Ainsi les dimensions exactes du stator 13 sont déterminées précisément et elles sont reproductibles lors d'un processus de fabrication en grande série.

La seconde matrice 82 cesse alors d'exercer l'effort sur le chignon 39 puis l'outil de conformage 78 est ouvert de façon à en extraire le stator 12.

La maîtrise des dimensions du stator 12 permet de supprimer les risques de frottement des tronçons des éléments conducteurs électriques 134 revêtus sur le carter 14 de l'alternateur 10, et donc de supprimer l'usure de la couche 136 et les risques de court-circuit.

On appréciera que les chignons 39 puissent venir au plus près des paliers ajourés respectivement avant et arrière du carter 12 grâce aux secondes matrices 82 des figures 10 et 11. Cela permet de réduire la taille du carter 14, et donc de gagner de la matière, ainsi que de réduire l'encombrement. Bien entendu, toutes les combinaisons sont possibles, l'un au moins des bobinages du stator 12 et du rotor 13 étant enrobé d'une couche de liaison 72. Le rotor 13 peut être en variante un rotor à pôles saillants et comporter plus d'un bobinage.

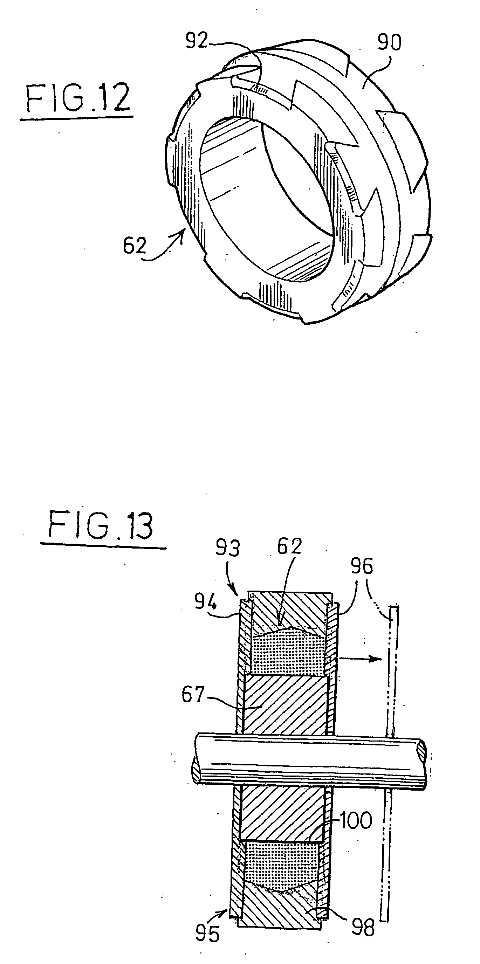

De façon similaire (figures 12 et 13), les dimensions extérieures du bobinage 62 du rotor 16 sont déterminées par un outil de conformage 93. Cet outil de conformage 93 comporte donc également une première matrice 95 en deux parties et une seconde matrice 98, cette fois-ci radialement extérieure, en deux parties mobiles radialement l'une par rapport à l'autre, cette fois-ci en direction de l'axe de l'arbre 15.

La première matrice 95 permet d'immobiliser le noyau 67, ces parties étant disposées de part et d'autre du noyau 67 au contact des extrémités axiales de celui-ci. La première matrice 95 consiste en deux flasques transversaux disposés de part et d'autre du noyau 67. Ces flasques sont dotés d'une surépaisseur sur leur périphérie radiale afin de centrer le noyau 67 et de définir un jeu entre les plateaux et le bobinage.

L'outil de conformage peut aussi donner avantageusement une forme particulière au bobinage 62 afin que celui-ci soit adjacent aux griffes 68,70 et aux plateaux 64,66. La deuxième matrice 98 présente donc deux parties ayant chacune intérieurement une forme creuse, ici en forme de V, pour accroître la taille du bobinage 62 et donc la puissance de la machine. Cela est rendu possible du fait de la présence de la résine 50 selon l'invention, qui permet d'évacuer la chaleur et donc de ménager les tampons 34 et le joint 46.

La figure 12 représente le bobinage 62 du rotor 16. Sa face 90 périphérique annulaire extérieure est de forme convexe, ici avec un profil en forme de V, en variante en forme de tonneau en sorte que le volume du bobinage 23 est augmenté. De plus, le bobinage 62 comporte des empreintes 92, qui sont réalisées par l'outil de conformage, pendant l'étape de chauffage et/ou l'étape de refroidissement, qui est mobile radialement, de façon à optimiser l'encombrement du bobinage 62. En effet, les empreintes 92 permettent le passage des griffes 68 et 70 des plateaux 64 et 66. Ainsi le volume du bobinage 62 peut être augmenté sans que l'encombrement total du rotor 13 soit modifié. Le rendement de l'alternateur 10 est alors augmenté.

Le procédé précité permet aussi de supprimer le fil de bobine, que porte classiquement un rotor classique pour support du bobinage 62, ainsi que d'augmenter la taille du bobinage. En effet, lors de l'étape d'enroulement, l'élément conducteur électrique 134 revêtu et enrobé peut être guidé transversalement par les deux flasques transversaux 94 et 96 qui déterminent la largeur du bobinage 62, conformément à la figure 13. Les deux flasques transversaux 94 et 96 maintiennent l'élément conducteur électrique 134 revêtu et enrobé jusqu'à la fin de l'étape de refroidissement après que l'élément de liaison 76 ait été chauffé à une température supérieure ou égale à sa température de durcissement. La deuxième matrice 98 permet d'exercer un effort radial sur au moins une zone annulaire axiale du bobinage 62 de façon à la déformer pour déterminer sa forme extérieure, notamment son diamètre. Les flasques transversaux 94, 96 ainsi que la matrice 98 sont ensuite escamotées axialement.

De façon similaire il est possible de déformer au moins l'une des zones de l'un ou moins des chignons 39. De façon à déterminer sa forme extérieure.

Une zone annulaire radiale du bobinage 23 peut être déformée de façon à réaliser un creux de forme complémentaire à un élément axial (non représenté) qui s'étend sur une face intérieure d'une paroi transversale du carter 14 en direction du stator 12. Un tel creux permet alors de diminuer globalement les dimensions axiales de l'alternateur 10 est ainsi de réduire son encombrement.

Le bobinage 62 est ici réalisé directement sur le noyau 67. Les étapes de chauffage et de refroidissement permettent au matériau de liaison de lier le bobinage 62 au noyau 67.

Le bobinage 62 peut aussi être réalisé sur une pièce intermédiaire de laquelle il est séparé après le durcissement de son matériau de liaison. Il est ensuite assemblé par un montage serré sur le noyau 67.

La suppression du corps de bobine permet d'une part de diminuer le nombre de pièces du rotor 13, ce qui diminue son coût de fabrication, mais aussi d'augmenter les échanges thermiques entre le bobinage 62 et l'extérieur, augmentant ainsi le rendement de l'alternateur 10.

L'augmentation des échanges thermiques permet aussi de réduire le besoin de refroidissement de l'alternateur 10, et par conséquent permet de diminuer la dimension des ailettes de refroidissement des ventilateurs avant 102 et arrière 104 représentés à la figure 1, voire de supprimer au moins l'un des ventilateurs avant 102, arrière 104 notamment le ventilateur avant 102.

La suppression du corps de bobine permet aussi, soit de diminuer le volume du rotor 13 tout en conservant la même puissance de l'alternateur 10, soit d'augmenter la puissance de l'alternateur 10 en augmentant les dimensions du bobinage 62 tout en conservant le volume du rotor 13. Cette augmentation de puissance est possible grâce à la résine 50 thermoconductrice selon l'invention.

Le chignon arrière 39 peut être plus long que le chignon 39 avant.

Pour diminuer ou supprimer les risques de court-circuit entre le bobinage 62 et le noyau 67 et/ou améliorer leur liaison, il est avantageux d'interposer entre ces deux éléments une feuille en matériau isolant électrique 100 similaire à la feuille 74 isolante du stator 13. La feuille en matériau isolant électrique 100 est moins épaisse que le corps de bobine de l'art antérieur et est avantageusement enduite ou imprégnée au moins partiellement d'un matériau de liaison qui peut être identique au matériau de liaison 76. De préférence les deux faces de le feuille 100 sont revêtues d'un matériau de liaison en sorte que le matériau de liaison permet aussi de lier le bobinage 62 et le noyau 67. Le matériau de liaison de la feuille 100 est donc de préférence du type thermoplastique, dont la température de fusion est supérieure à la température maximale de fonctionnement de la machine ou avantageusement du type thermodurcissable ce qui permet d'augmenter la fiabilité de la machine. De manière précitée le matériau de liaison est un polymère.

Avantageusement les feuilles 74,100 sont thermiquement conductrices pour favoriser l'évacuation de la chaleur respectivement vers le corps 19 et vers le noyau 67. Ces feuilles ont une faible épaisseur.

Le procédé permet en variante de diminuer le volume occupé par les bobinages 23 et 62 ce qui diminue leur volume. Par conséquent, cela diminue l'émission de bruit aéraulique lors du fonctionnement de l'alternateur 10.

La raideur du matériau de liaison 73, 76 utilisé est avantageusement plus faible que celle du vernis utilisé selon l'état de la technique. Ceci permet de diminuer la raideur de l'ensemble constitué par l'un au moins des bobinages 23, 62 et les éléments auxquels il est lié par le matériau de liaison 73, 76, ce qui diminue notamment le bruit magnétique émis par l'alternateur 10 tout en résistant aux contraintes mécaniques, notamment vibratoires.

De plus, le matériau de liaison 73, 76 utilisé est de préférence insensible aux variations de températures dans la plage de température de fonctionnement de l'alternateur 10. Ainsi, le niveau de bruit magnétique émis par l'alternateur 10 est sensiblement constant au cours du fonctionnement de l'alternateur 10.

Le procédé permet aussi de diminuer les dispersions des dimensions des enroulements 23 et 62 du stator 12 et du rotor 13. Ainsi il est possible de diminuer les jeux de fonctionnement entre le bobinage 62 et les plateaux 64, 70 et les griffes 68, 70 respectivement, ainsi que les jeux entre le stator 13 et les ventilateurs 102, 104 respectivement. Grâce à ces dispositions on maîtrise les jeux qui sont faibles.

Le procédé permet encore de diminuer les jeux de fonctionnement existant radialement et axialement respectivement entre les chignons 39 du stator 13 et le carter 14.

Grâce au procédé précité on peut diminuer l'encombrement de l'alternateur tout en ayant une plus grande puissance et une bonne évacuation de la chaleur grâce à la résine selon l'invention

Le durcissement du matériau de liaison est obtenu par l'étape de chauffage qui peut consister à chauffer le matériau de liaison par étuvage de façon à porter sa température à une température supérieure ou égale à sa température de durcissement.

Selon une variante, l'étape de chauffage consiste à échauffer l'élément conducteur électrique 134 revêtu et enrobé par effet Joule de façon à porter la température du matériau de liaison à une température supérieure ou égale à sa température de durcissement. La température doit être suffisamment élevée et le chauffage doit durer suffisamment longtemps pour que le matériau de liaison 76 qui enduit la feuille isolante 74,100 atteigne lui aussi sa température de durcissement. Cela est réalisé par exemple en faisant circuler du courant d'une intensité suffisante dans le conducteur électrique du bobinage 23 et/ou 62 pour provoquer un échauffement. Bien entendu la température de l'élément conducteur doit dans tous les cas rester inférieure à une température maximale pour ne pas endommager la couche du matériau isolant électrique 136.

Cette augmentation de puissance de la machine nécessite de conformer l'agencement de redressement 1.

Ainsi à la figure 14 on voit partiellement le palier arrière 16 avec son rebord périphérique doté d'ouvertures 5 et son flasque 3 également doté d'ouvertures dont l'une est référencée en 7 à la figure 7.

L'agencement 1 comprend une pluralité de diodes positives 8 supportées par un dissipateur de chaleur métallique 9 en forme de plaque et une pluralité de diodes négatives 10 portées par le flasque 3 du palier arrière 16. Ici trois diodes positives 8 et trois diodes négatives 10 sont prévues.

Les diodes 8, 10 présentent chacune un corps cylindrique et des queues comme mieux visible à la figure 7. Ces diodes sont montées tête bêche pour réduction de l'encombrement axial.

Les diodes négatives 10 sont emmanchées à force par leur corps, moleté à cet effet, dans des trous du flasque 3 du palier 16 et ce dans une zone qui entoure les ouvertures 7.

Les queues 111 des diodes négatives 10 traversent des trous 111' pratiqués dans la plaque 9.

Les diodes positives 8 sont emmanchées à force par leur corps dans des trous 8' pratiqués dans la plaque 9. Les queues des diodes positives traversent les ouvertures 7 du flasque 3 du palier 16 comme visible à la figure 7. La plaque 9 est en matière moulable en étant ici à base d'aluminium. La plaque est globalement en forme de secteur annulaire.

La plaque 9 est séparée du flasque 3 du palier 16 par une plaque 113 en matériau électriquement isolant, ici en matière plastique, surmoulée sur un ensemble de conducteurs électriques plats. La plaque 113 est globalement en forme de secteur annulaire.

La plaque 9 est trouée et comprend un grand nombre de nervures 118,119 en forme d'ailettes.

Une ouverture de passage 120 d'air de refroidissement est prévue avantageusement entre chaque paire d'ailettes 118, 119 adjacentes.

Certaines des ailettes 118 s'étendent jusqu'à la périphérie externe de la plaque 9.

Deux diodes positives 8 sont implantées près de la périphérie externe de la plaque 9.

Les diodes 8 disposées près de la périphérie externe de la plaque 9 sont implantées sensiblement sur le même cercle que les trous 111' des diodes 10 et que les trous de passage 115' des vis de fixation de la plaque 9 ou flasque 3.

La troisième diode 8 est implantée au voisinage d'une surépaisseur de montage d'une partie filetée 117 servant de borne pour le raccordement à la borne positive de la batterie du véhicule.

Il est également prévu un régulateur de tension 116 et le porte-balais référencé en 200 à la figure 14.

Le régulateur 116 est du type de celui décrit dans le document FR-A-2 780 577 et comporte donc un sous-ensemble comportant un substrat sur lequel est monté au moins un composant électronique élémentaire tel qu'une puce autre qu'un circuit intégré. Le sous-ensemble comporte dans une forme de réalisation plusieurs composants électroniques élémentaires et plusieurs circuits intégrés.

Le sous-ensemble comporte des moyens de montage des balais et est donc intégré dans une forme de réalisation au porte-balais 200.

Pour plus de précisions, on se reportera à ce document, le composant électronique élémentaire étant relié à des traces métalliques en étant monté à la faveur d'un orifice du substrat.

Les ailettes 118, 119 font saillie perpendiculairement à la face supérieure de la plaque 9, thermiquement conductrice.

La diode positive 8 médiane est implantée entre deux ailettes longues 118.

Comme le montre clairement les figures, la plaque est percée entre les ailettes dans l'espace disponible. Ces ouvertures 120 constituent avec les ailettes radiales 118, 119 convergentes vers l'intérieur, des canaux axiaux de refroidissement qui assurent un écoulement accéléré de l'air de refroidissement aspiré par le ventilateur interne et ensuite refoulé à travers les ouvertures latérales 5 du palier.

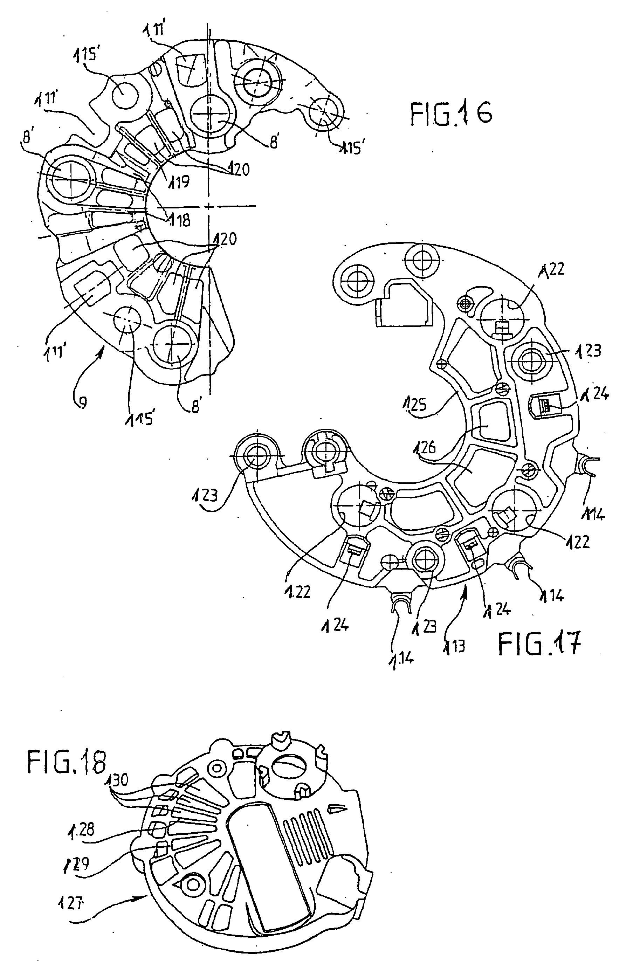

La figure 17 illustre la plaque intermédiaire isolante 13 qui comporte, de la manière correspondant à la plaque 9 de support des diodes positives 8, des trous de passage 122 des queues des diodes positives 8, des trous de passage 123 des vis de fixation 115 et des trous de passage 124 des queues de passage des diodes négatives 10, tous dans la zone annulaire extérieure près de sa périphérie, la partie annulaire 125 située plus à l'intérieur étant pourvue de larges ouvertures 126 d'écoulement de l'air de refroidissement et dont la disposition correspond aux ouvertures 120 de la plaque 8. Dans le cadre de l'invention il pourrait être envisagé de supprimer cette partie annulaire 125 de la plaque isolante, ce qui permet de réduire la taille de la plaque 13.

La figure 18 montre le capot de protection 27, qui se distingue par sa configuration optimisée, parfaitement adaptée au dissipateur du fait que sa partie située au-dessus de celui-ci est fortement ajourée en ne laissant subsister que des nervures radiales étroites 128 et une nervure coaxiale également étroite 129. Les ouvertures 130 importantes ainsi obtenues, qui s'étendent radialement comme les ailettes de refroidissement 119, 118 assurent un écoulement accélère purement axial de l'air de refroidissement aspiré et ainsi un refroidissement optimal de l'agencement de redressement de l'alternateur. On notera que c'est uniquement la partie formant le plateau central d'orientation transversale du capot 27 qui est doté des ouvertures, le rebord annulaire d'orientation axiale du capot, se raccordant à la périphérie externe du plateau central, étant dépourvu d'ouvertures. L'air passe donc axialement à travers les ouvertures 128 et 120, sachant que les ouvertures 120 sont en vis-à-vis des ouvertures 7 du palier arrière.

Dans tous les cas l'agencement de redressement comporte un dissipateur 9 en forme de plaque trouée à ailettes radiales, une plaque 13 à connecteurs et un troisième constituant le support des diodes négatives formé par le palier arrière ou une plaque solidaire du palier arrière. Il est donc fait appel à trois pièces principales.

Le connecteur 113 intercalé entre la dissipation 9 et le plateau 3 du palier arrière ou une plaque solidaire de celui-ci. Des canaux radiaux sont formés entre les ailettes. Les queues des diodes positives sont dirigées vers le support des diodes négatives. Deux au moins des diodes positives s'étendent au-dessus des ouvertures 120.

Grâce aux ailettes radiales et des ouvertures établies entre elles, du dissipateur support des diodes positives, on obtient un écoulement accéléré et ainsi optimisé de l'air de refroidissement, duquel contribuent les ouvertures prévues en vis-à-vis dans le palier et dans la plaque isolante formant connecteur. Etant donné que les diodes positives sont disposées près de la périphérie extérieure de la plaque de support, le connecteur peut avoir une taille réduite. Il est à noter que toutes les ouvertures sont configurées de sorte qu'ils réduisent des pertes de charge en facilitant l'écoulement de l'air. Il est encore à souligner que les ouvertures dans le capot sont alignées avec les ailettes du dissipateur support des diodes positives.

Le fait que les ailettes 118,119 convergent vers l'intérieur permet d'accélérer l'écoulement du fluide de refroidissement ici de l'air en variante un autre fluide.

Le dispositif de deux des diodes positives à la périphérie externe du dissipateur 9 permet d'augmenter l'épaisseur du dissipateur 9 à cet endroit, en créant sur celui-ci par exemple une surépaisseur de section globalement trapézoïdale. Ainsi on évacue mieux la chaleur et la plaque 9 est rigidifiée. Avantageusement la plaque 9 est obtenue par moulage en étant à base d'aluminium.

On notera que le bobinage 23 comporte plusieurs enroulements agencés pour former ici les trois phases de l'alternateur. On voit à la figure 1 trois conducteurs électriques à raison de un par phase. Ces conducteurs sont reliés aux conducteurs plats de la plaque 113 à la faveur d'éléments en forme de pince-fils 114 que comportent les éléments conducteurs plats.

Le flasque 3 présente des ouvertures pour le passage des conducteurs des phases comme visible à la figure 7. On notera que des douilles électriquement isolantes épaulées interviennent entre les vis 115 et les trous 115' pour éviter tout court-circuit. Certaines vis 115 présentent une partie filetée pour fixation du capot 27 par clipsage.

Ainsi selon l'invention l'alternateur décrit ci-dessus présente un stator parfaitement centré grâce à la résine et un carter de taille axiale réduite ainsi qu'un agencement de redressement bien refroidi. L'alternateur est puissant dans un volume réduit tout en étant peu bruyant.

## Revendications

1. Machine électrique tournante (10) du type comportant un rotor (13) présentant un axe (X-X), un stator (12) doté d'un corps (19) de forme générale annulaire cylindrique entourant le rotor (13) et qui est agencé dans un carter (14) comprenant une portion arrière (16) et une portion avant (18) reliées entre elles selon un plan de joint (P) perpendiculaire à l'axe (X-X) du rotor de la machine (10), dans lequel la face axiale externe (24) du corps (19) du stator (12) délimite, avec la face axiale interne (30) du carter (14), un espace radial annulaire (32), et dans lequel le corps (19) du stator (12) est monté serré axialement entre les surfaces radiales de portées opposées (36, 48) formées dans chacune des deux portions (16, 18) du carter (14), avec interposition d'au moins un premier élément déformable élastiquement (34, 46) comprimé axialement entre chacune des deux surfaces de portée (36, 48) et une portion de la face radiale annulaire d'extrémité en vis-à-vis (20, 22) du corps (19) du stator (12), **caractérisée en ce qu'**au moins une partie de l'espace radial annulaire (32) contient un deuxième élément déformable élastiquement sous forme de résine thermoconductrice (50), qui s'interpose radialement entre le carter (14) et le corps (19) du stator (12), en vue de réaliser un découplage mécanique radial entre le corps (19) du stator (12) et le carter (14), et en vue de dissiper l'énergie thermique depuis le corps (19) du stator (12) vers le carter (14) .

2. Machine électrique tournante (10) selon la revendication précédente, **caractérisée en ce que** seule la portion avant (18) du carter (14) contient de la résine thermoconductrice (50).

3. Machine électrique tournante (10) selon la revendication. 1 ou 2, **caractérisée en ce qu'**un joint annulaire plat (46) déformable élastiquement est interposé axialement entre la face radiale annulaire d'extrémité avant (22) du corps (19) du stator (12) et la surface radiale de portée (48) formée dans la portion avant (18) du carter (14).

4. Machine électrique tournante (10) selon l'une quelconque des revendications précédentes, **caractérisée en ce qu'**une série de tampons (34) déformables élastiquement sont répartis angulairement et comprimés axialement entre la face radiale annulaire d'extrémité arrière (20) du corps (19) du stator (12) et une portion de la surface radiale de portée (36) formée dans la portion arrière (16) du carter (14).

5. Machine électrique tournante (10) selon la revendication précédente, **caractérisée en ce que** chaque tampon (34) comporte une patte de positionnement (38) en queue d'aronde qui est reçue axialement dans un logement complémentaire (44) formé dans la portion arrière (16) du carter (14).

6. Alternateur (10), pour un véhicule automobile, **caractérisé en ce qu'**il est réalisé conformément à l'une quelconque des revendications précédentes.

7. Alternateur (10) selon la revendication 6, **caractérisé en ce qu'**il est apte à fonctionner alternativement comme moteur de démarreur ou comme alternateur.

8. Alternateur (10) selon la revendications 6 ou 7, **caractérisé en ce que** le rotor (13) comporte un bobinage (62) et deux plateaux (64, 66) à griffes (68,70), **en ce que** le bobinage (62) est agencé entre les plateaux (64,66) et les griffes (68, 70) et an ce que le bobinage (62) est adjacent aux griffes (68, 70) et aux plateaux (64, 66) en sorte qu'un faible jeu existe entre les griffes (68,70) et les plateaux (64, 66).

9. Alternateur selon l'une quelconque des revendications 6 à 8, **caractérisé en ce que** le carter (14) est ajouré, **en ce que** le corps (19) du stator (12) porte un bobinage électrique (23), qui comporte des chignons (39) s'étendant de part et d'autre du corps (19) du stator (12), et **en ce qu'**au moins un ventilateur interne (104, 102)) est solidaire du rotor (13) et est implanté à l'intérieur du carter (14) en dessous d'un chignon (39).

10. Alternateur selon la revendication 9, **caractérisé en ce qu'**une couche de liaison (72) enrobe la couche (136) en matériau isolant (136) des éléments électriquement conducteurs (134) du bobinage (62,23) respectivement du rotor (13) et du stator (23).

11. Alternateur selon la revendication 9 ou 10, **caractérisé en ce que** la portion arrière (16) porte un agencement de redressement (1)de courant comportant des diodes négatives (10) porté par la portion arrière (16) et des diodes positives (8) portées par une plaque de support (9) , **en ce que** la plaque de support (9) comporte un grand nombre de nervures (118,119) en forme d'ailettes et **en ce qu'**une ouverture de passage (120) d'air de refroidissement est prévue entre chaque paire d'ailettes adjacentes.

12. Alternateur selon la revendication 11, **caractérisé en ce qu'**il comporte un capot (27) qui comporte au niveau des ailettes (118, 119) de la plaque (9) des ouvertures radiales correspondantes .

## Claims

1. Rotary electric machine (10) of the type comprising a rotor (13) having an axis (X-X), a stator (12) provided with a body (19) of cylindrical annular overall shape surrounding the rotor (13) and which is placed in a casing (14) comprising a rear portion (16) and a front portion (18) which portions are joined together along a parting line (P) perpendicular to the axis (X-X) of the rotor of the machine (10), in which the external axial face (24) of the body (19) of the stator (12) delimits, with the internal axial face (30) of the casing (14), an annular radial space (32), and in which the body (19) of the stator (12) is mounted tightly axially between the opposing radial bearing surfaces (36, 48) formed in each of the two portions (16, 18) of the casing (14) with the interposition of at least one elastically deformable first element (34, 46) compressed axially between each of the two bearing surfaces (36, 48) and an opposite portion (20, 22) of the annular radial end face of the body (19) of the stator (12), **characterized in that** at least part of the annular radial space (32) contains a second elastically deformable element in the form of a heat-conducting resin (50) which is interposed radially between the casing (14) and the body (19) of the stator (12) in order to effect a radial mechanical uncoupling between the body (19) of the stator (12) and the casing (14) and in order to dissipate heat energy from the body (19) of the stator (12) into the casing (14).

2. Rotary electric machine (10) according to the preceding claim, **characterized in that** only the front portion (18) of the casing (14) contains heat-conducting resin (50).

3. Rotary electric machine (10) according to Claim 1 or 2, **characterized in that** an elastically deformable flat annular seal (46) is interposed axially between the annular radial front end face (22) of the body (19) of the stator (12) and the radial bearing surface (48) formed in the front portion (18) of the casing (14).

4. Rotary electric machine (10) according to any one of the preceding claims, **characterized in that** a series of elastically deformable buffers (34) are angularly distributed and axially compressed between the annular radial rear end face (20) of the body (19) of the stator (12) and a portion of the radial bearing surface (36) formed in the rear portion (16) of the casing (14) .

5. Rotary electric machine (10) according to the preceding claim, **characterized in that** each buffer (34) comprises a dovetail positioning tab (38) which is housed axially in a complementary housing (44) formed in the rear portion (16) of the casing (14).

6. Alternator (10) for a motor vehicle, **characterized in that** it is produced in accordance with any one of the preceding claims.

7. Alternator (10) according to Claim 6, **characterized in that** it is able to operate alternately as a starter motor or as an alternator.

8. Alternator (10) according to Claim 6 or 7, **characterized in that** the rotor (13) comprises a coil (62) and claw (68, 70) rings (64, 66), **in that** the coil (62) is positioned between the rings (64, 66) and the claws (68, 70), and **in that** the coil (62) is adjacent to the claws (68, 70) and to the rings (64, 66) so that a small clearance exists between the claws (68, 70) and the rings (64, 66).

9. Alternator according to any one of Claims 6 to 8, **characterized in that** the casing (14) is perforated, **in that** the body (19) of the stator (12) carries an electric coil (23) which comprises bundles (39) extending on each side of the body (19) of the stator (12), and **in that** at least one internal fan (104, 102) is secured to the rotor (13) and installed inside the casing (14) underneath a bundle (39).

10. Alternator according to Claim 9, **characterized in that** a bonding layer (72) coats the layer (136) of insulating material (136) of the electrically conducting elements (134) of the coil (62, 23) of the rotor (13) and of the stator (23) respectively.

11. Alternator according to Claim 9 or 10, **characterized in that** the rear portion (16) carries a current rectifier arrangement (1) comprising negative diodes (10) borne by the rear portion (16) and positive diodes (8) borne by a support plate (9), **in that** the support plate (9) comprises a great many ribs (118, 119) in the form of fins, and **in that** a cooling-air through-opening (120) is made between each pair of adjacent fins.

12. Alternator according to Claim 11, **characterized in that** it comprises a cover (27) which in the region of the fins (118, 119) of the plate (9) has corresponding radial openings.

## Patentansprüche

1. Drehende elektrische Maschine (10) des Typs, der umfasst: einen Rotor (13) mit einer Achse (X-X) und einen Stator (12), der mit einem Körper (19) mit einer im Allgemeinen zylindrischen Ringform versehen ist, der den Rotor (13) umgibt und in einem Gehäuse (14) angeordnet ist, das einen hinteren Abschnitt (16) und einen vorderen Abschnitt (18) aufweist, die miteinander längs einer Verbindungsebene (P) senkrecht zu der Achse (X-X) des Rotors der Maschine (10) verbunden sind, wobei die äußere axiale Fläche (24) des Körpers (19) des Stators (12) mit der inneren axialen Fläche (30) des Gehäuses (14) einen ringförmigen radialen Raum (32) begrenzt, und wobei der Körper (19) des Stators (12) axial eingeklemmt zwischen den radialen Oberflächen mit gegenüberliegenden Auflageflächen (36, 48), die in jedem der zwei Abschnitte (16, 18) des Gehäuses (14) ausgebildet sind, unter Einfügung wenigstens eines ersten elastisch verformbaren Elements (34, 46), das zwischen jedem der zwei Auflageoberflächen (36, 48) und einem Abschnitt der ringförmigen radialen Stirnfläche gegenüber (20, 22) des Körpers (19) des Stators (12) komprimiert ist, montiert ist, **dadurch gekennzeichnet, dass** wenigstens ein Teil des ringförmigen radialen Raums (32) ein zweites elastisch verformbares Element in Form eines wärmeleitenden Harzes (50) enthält, das radial zwischen das Gehäuse (14) und den Körper (19) des Stators (12) eingefügt ist, um eine radiale mechanische Entkopplung zwischen dem Körper (19) des Stators (12) und dem Gehäuse (14) zu verwirklichen und um Wärmeenergie von dem Körper (19) des Stators (12) zu dem Gehäuse (14) abzuführen.

2. Drehende elektrische Maschine (10) nach dem vorhergehenden Anspruch, **dadurch gekennzeichnet, dass** nur der vordere Abschnitt (18) des Gehäuses (14) ein wärmeleitendes Harz (50) enthält.

3. Drehende elektrische Maschine (10) nach Anspruch 1 oder 2, **dadurch gekennzeichnet, dass** eine flache Ringdichtung (46), die elastisch verformbar ist, axial zwischen die vordere ringförmige radiale Stirnfläche (22) des Körpers (19) des Stators (12) und die radiale Auflageoberfläche (48), die in dem vorderen Abschnitt (18) des Gehäuses (14) gebildet ist, eingefügt ist.

4. Drehende elektrische Maschine (10) nach einem der vorhergehenden Ansprüche, **dadurch gekennzeichnet, dass** eine Reihe elastisch verformbarer Stopfen (34) in Winkelrichtung verteilt sind und axial zwischen der hinteren ringförmigen radialen Stirnfläche (20) des Körpers (19) des Stators (12) und einem Abschnitt der radialen Auflageoberfläche (36), die im hinteren Abschnitt (16) des Gehäuses (14) gebildet ist, komprimiert sind.

5. Drehende elektrische Maschine (10) nach dem vorhergehenden Anspruch, **dadurch gekennzeichnet, dass** jeder Stopfen (34) eine schwalbenschwanzförmige Positionierungslasche (38) aufweist, die in einem komplementären Aufnahmesitz (44), der in dem hinteren Abschnitt (16) des Gehäuses (14) gebildet ist, axial aufgenommen ist.

6. Wechselstrommaschine (10) für ein Kraftfahrzeug, **dadurch gekennzeichnet, dass** sie gemäß einem der vorhergehenden Ansprüche verwirklicht ist.

7. Wechselstrommaschine (10) nach Anspruch 6, **dadurch gekennzeichnet, dass** sie abwechselnd als Anlassermotor oder als Wechselstromgenerator arbeiten kann.

8. Wechselstrommaschine (10) nach Anspruch 6 oder 7, **dadurch gekennzeichnet, dass** der Rotor (13) eine Wicklung (62) und zwei Platten (64, 66) mit Klauen (68, 70) umfasst, dass die Wicklung (62) zwischen den Platten (64, 66) und den Klauen (68, 70) angeordnet ist und dass die Wicklung (62) zu den Klauen (68, 70) und zu den Platten (64, 66) benachbart ist, derart, dass zwischen den Klauen (68, 70) und den Platten (64, 66) ein geringes Spiel vorhanden ist.

9. Wechselstrommaschine nach einem der Ansprüche 6 bis 8, **dadurch gekennzeichnet, dass** das Gehäuse (14) durchbrochen ist, dass der Körper (19) des Stators (12) eine elektrische Wicklung (23) trägt, die Endstücke (39) aufweist, die sich beiderseits des Körpers (19) des Stators (12) erstrecken, und dass wenigstens ein interner Ventilator (104, 102) mit dem Rotor (13) fest verbunden ist und in das Gehäuse (14) unterhalb eines Endstücks (39) eingesetzt ist.

10. Wechselstrommaschine nach Anspruch 9, **dadurch gekennzeichnet, dass** eine Verbindungsschicht (72) die Schicht (136) aus Isoliermaterial (136) der elektrisch leitenden Elemente (134) der Wicklung (62, 23) des Rotors (13) bzw. des Stators (23) umgibt.

11. Wechselstrommaschine nach Anspruch 9 oder 10, **dadurch gekennzeichnet, dass** der hintere Abschnitt (16) eine Stromgleichrichteranordnung (1) trägt, die negative Dioden (10), die von dem hinteren Abschnitt (16) getragen werden, und positive Dioden (8), die von einer Tragplatte (9) getragen werden, umfasst, dass die Tragplatte (9) eine große Anzahl von Stegen (118, 119) in Flügelform enthält und dass zwischen jedem Paar benachbarter Flügel eine Durchgangsöffnung (120) für Kühlungsluft vorgesehen ist.

12. Wechselstrommaschine nach Anspruch 11, **dadurch gekennzeichnet, dass** sie eine Kappe (27) aufweist, die auf Höhe der Flügel (118, 119) der Platte (9) entsprechende radiale Öffnungen aufweist.
